# EUROPÄISCHE PATENTANMELDUNG

(11) **EP 3 696 447 A1**
(43) Veröffentlichungstag der Anmeldung: **19.08.2020**
(21) Anmeldenummer: 19156632.2
(22) Anmeldetag: 12.02.2019
(51) Int. Cl.: F16H 55/16, F16H 55/06

(54) **GETRIEBEELEMENT UND VERFAHREN ZUR FERTIGUNG EINES GETRIEBEELEMENTS**

(71) Anmelder: Siemens Aktiengesellschaft, 80333 München (DE)
(72) Erfinder: Kamps, Tobias, 80538 München (DE)

(57) **Zusammenfassung**

Das mit Zähnen gezahntes Getriebeelement weist mindestens einen mit einem ersten Material gebildeten Teilbereich sowie einen mit einem zweiten Material additiv gebildeten Rand auf, wobei das zweite Material eine größere Härte als das erste Material aufweist oder Druckeigenspannungen in der Oberfläche induziert.

Bei dem Verfahren zur Fertigung eines Getriebeleements nach einem der vorhergehenden Ansprüche wird zumindest das zweite Material mittels Laserauftragsschweißens, insbesondere Laserdrahtauftragsschweißens, und/oder thermischen Spritzens und/oder Kaltgasspritzens und/oder Lichtbogenauftragsschweißens und/oder eines Pulverbettverfahrens und/oder Selective Laser Meltings gebildet.

## Beschreibung

Die Erfindung betrifft ein Getriebeelement sowie ein Verfahren zur Fertigung eines Getriebeelements und eine, insbesondere elektrische, Maschine sowie ein Getriebe und eine Turbine.

Getriebeelemente wie insbesondere Zahnräder und Zahnstangen unterliegen hohen Anforderungen sowohl hinsichtlich ihrer Oberflächenhärte als auch der Duktilität ihres Materials im Inneren. Einerseits muss die Oberflächenhärte für den Betrieb eines Getriebeelements hinreichend hoch sein. Zugleich müssen solche Getriebeelemente in ihrem Inneren, also ihrem Kern, eine hinreichend hohe Duktilität aufweisen, um dynamische Kräfte auf das Getriebeelement kompensieren zu können. Gleichzeitig ist es von Vorteil, wenn die Oberfläche des Getriebeelementes Druckeigenspannungen aufweist. Solche Anforderungen bestehen insbesondere bei Getriebeelementen von Turbinen und, insbesondere elektrischen, Maschinen.

Es ist bekannt, Verzahnungen von Getriebeleementen aus Einsatzstahl herzustellen und einen im Übrigen geringen Kohlenstoffgehalt des Werkstoffs durch oberflächliche Aufkohlung zu vergrößern. Anschließend kann das Getriebeelement gehärtet werden, sodass das Getriebeelement eine oberflächlich besonders harte Verzahnung aufweist und im Übrigen hinreichend weich, d.h. duktil, ausgebildet ist. Die Prozesskette zur Oberflächenhärtung ist jedoch zeitintensiv, kostenintensiv, energieaufwändig und beeinträchtigt die Umwelt aufgrund der Verwendung von Prozessgasen.

Alternativ ist es möglich, unter Verwendung von Einsatzstählen eine komplexe chemische Werkstoffanpassung und eine Wärmebehandlung vorzunehmen oder aber Getriebeelemente oberflächlich zu nitrieren oder einer Randschichthärtung mittels Lasern oder Induktion zu unterziehen. Diese Alternativen sind jedoch hinsichtlich ihrer Materialeigenschaften wie insbesondere ihrer Oberflächenhärte oder ihres Härtetiefenverlaufs beschränkt, sodass solche Getriebeeelemente nicht für hohe Festigkeitsansprüche umfassend einsetzbar sind.

Es ist daher Aufgabe der Erfindung, ein Getriebeelement anzugeben, welches hinsichlich seiner Materialeigenschaften zuverlässig in Turbinen und/oder Maschinen einsetzbar ist und welches zugleich kostengünstig und vergleichsweise einfach herstellbar ist. Ferner ist es Aufgabe der Erfindung, ein Verfahren zur Fertigung eines solchen Getriebeelements anzugeben, welches zuverlässig und unaufwendig durchgeführt werden kann. Zusätzlich ist es Aufgabe der Erfindung, eine Maschine und eine Turbine anzugeben, welche ein solches Getriebeelement aufweisen.

Diese Aufgabe der Erfindung wird mit einem Getriebeelement mit den in Anspruch 1 angegebenen Merkmalen und mit einem Verfahren mit den in Anspruch 11 angegebenen Merkmalen sowie mit einem Getriebe mit den in Anspruch 12 angegebenen Merkmalen und mit einer Maschine mit den in Anspruch 13 angegebenen Merkmalen sowie mit einer Turbine mit den in Anspruch 14 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Getriebeelement ist mit Zähnen gezahnt und weist mindestens einen mit einem ersten Material gebildeten Teilbereich sowie mindestens einen mit einem zweiten Material additiv gebildeten Randbereich auf. Bei dem erfindungsgemäßen Getriebeelement weist das zweite Material eine größere Härte auf als das erste Material oder aber das zweite Material weist infolge seiner Anbindung an das erste Material, insbesondere aufgrund der Abweichungen der Gefüge des ersten und des zweiten Materials, Druckeigenspannungen an einer Oberfläche des Randbereichs auf.

Vorteilhaft weist das erfindungsgemäße Getriebeelement aufgrund der unaufwendig erzielbaren Oberflächenhärte des Randbereichs eine erheblich vergrößerte Einsatzzeit auf. Damit ist das erfindungsgemäße Getriebeelement mit deutlich verringerten Wartungskosten und/oder Reparaturkosten einsetzbar. Zugleich ist der erste Teilbereich mit hinreichend duktilem Material ausbildbar, sodass der erste Teilbereich eine mechanische Pufferfunktion übernehmen kann, um dynamische Kräfte auf das Getriebeelement zu kompensieren.

Geeignet ist das erfindungsgemäße Getriebeelement mittels Mehrachs- oder Robotersystemen unaufwendig mittels additiver Fertigung fertigbar. Erfindungsgemäß können die Materialeigenschaften gradiert ausgelegt werden, sodass das Getriebeelement in seinem Inneren aufgrund des ersten Materials eine hinreichend hohe Duktilität aufweist. Zugleich ist das erfindungsgemäße Getriebeelement aufgrund des zweiten Materials hinreichend hart, insbesondere sprödhart, ausbildbar. Die sprödharte-duktile Werkstoffkombination kann aufgrund der Fertigungsmethode insbesondere gradiert aufgebaut werden, sodass ein gradierter Härtetiefenverlauf oder ein Druckeigenspannungsgefälle eingestellt werden kann. Aufgrund der Ausbildung des Getriebeelements zumindest hinsichtlich des zweiten Materials als additives Werkstück kann eine Vielzahl von Werkstoffkombinationen realisiert werden. Insbesondere kann IN718 als erstes Material eingesetzt werden, sodass das Getriebeelement bezüglich des ersten Materials besonders warmfest und duktil ausgelegt sein kann. Als additives Werkstück kann das erfindungsgemäße Getriebeelement einen gradierten oder gestuften Übergang zu einem zweiten Material, insbesondere in ein oder mehrere Stellite und/oder Hartmetalle und/oder intermetallische Werkstoffe, aufweisen.

Als additives Werkstück kann das erfindungsgemäße Getriebeelement kostengünstig nahezu beliebig ausgebildete Sonderverzahnungen aufweisen.

Vorteilhaft kann das erfindungsgemäße Getriebeelement mittels des erfindungsgemäßen Verfahrens aufgrund der additiven Fertigung kostengünstig hergestellt werden. Insbesondere fallen deutlich reduzierte Werkzeugkosten an. Zudem sind erfindungsgemäß aufgrund der grundsätzlichen Verwendbarkeit von Robotern reduzierte Maschinenstundensätze erzielbar. Rüstzeiten sind erfindungsgemäß erheblich reduzierbar. Vorteilhaft weist das erfindungsgemäße Getriebeelement eine reduzierte Fertigungszeit, insbesondere gegenüber einer konventionellen Fertigung bei schwer zerspanbaren Materialien, auf.

Als zumindest hinsichtlich des zweiten Materials additives Werkstück ist das erfindungsgemäße Getriebeelement insbesondere auch in kleinen Losgrößen kostengünstig fertigbar.

Vorzugsweise beträgt bei dem erfindungsgemäßen Getriebeelement die Differenz der Vickers-Härte von zweitem Material und erstem Material mindestens 100 HV, vorzugsweise mindestens 200 HV und idealerweise mindestens 400 HV. Bevorzugt weist das zweite Material eine Vickers-Härte von zumindest 500 HV, vorzugsweise mindestens 600 HV und vorzugsweise zumindest 700 HV oder sogar zumindest 780 HV auf und/oder das erste Material weist eine Vickers-Härte von höchstens 400 HV und vorzugsweise höchstens 350 HV auf.

Vorteilhaft weist das erfindungsgemäße Getriebeelement aufgrund der einfach erzielbaren Oberflächenhärte eine erheblich vergrößerte Einsatzzeit auf. Damit ist das erfindungsgemäße Getriebeelement mit deutlich verringerten Wartungskosten und/oder Reparaturkosten einsetzbar. Zugleich ist das Material des ersten Teilbereiches in weiten Grenzen beliebig duktil ausbildbar.

Zweckmäßig weisen bei dem erfindungsgemäßen Getriebeelement zumindest ein oder mehrere, vorzugsweise sämtliche, der Zähne den mit dem zweiten Material additiv gebildeten Randbereich auf. Vorteilhaft sind sämtliche Zähne mit dem zweiten Material gebildet. Grundsätzlich lässt sich jedoch bereits eine robuste Auslegung des erfindungsgemäßen Getriebeelements auch dann erreichen, wenn lediglich jeder zweite oder jeder dritte oder jeder n-te Zahn mit dem zweiten Material gebildet ist.

Besonders bevorzugt ist das erfindungsgemäße Getriebeelement mit mehr als zwei Materialien gebildet, wobei die weiteren Materialien zweckmäßig einen gestuften oder kontinuierlichen Anstieg der Härte von erstem bis hin zum zweiten Material realisieren. Zweckmäßig sind die weiteren Materialien zwischen erstem und zweitem Material befindlich. Idealerweise weisen bei dem erfindungsgemäßen Getriebeelement ein oder mehrere, vorzugsweise sämtliche, der Zähne den mit dem zweiten Material additiv gebildeten Randbereich auf. Vorzugsweise wird das erfindungsgemäße Getriebeelement mittels eines oder mehrerer oder sämtlicher dieser weiteren Materialien additiv gebildet.

Vorzugsweise ist bei dem Getriebeelement gemäß der Erfindung zudem der Teilbereich additiv gebildet oder der Teilbereich ist alternativ und ebenfalls bevorzugt mittels Urformung, vorzugsweise Gießens, Umformens, vorzugsweise Schmiedens, Subtraktiv, insbesondere Zerspanens, gebildet.

Vorteilhaft ist in letztgenannter Weiterbildung des erfindungsgemäßen Getriebeelements ein konventionell aus dem ersten Material gefertigter Kern heranziehbar, sodass das erfindungsgemäße Getriebeelement besonders kostengünstig fertigbar ist.

Geeigneterweise weist bei dem erfindungsgemäßen Getriebeeleement das erste Material eine höhere Duktilität als das zweite Material auf. Somit kann das erste Material und somit insbesondere der Teilbereich dynamische Kräfte auf das Getriebeelement kompensieren.

Das Getriebeelement gemäß der Erfindung ist zweckmäßig ein Zahnrad oder eine Zahnstange oder weist zweckmäßig ein Zahnrad oder eine Zahnstange auf.

Bei dem erfindungsgemäßen Getriebeelement nimmt die Härte entlang eines von einem Randbereich zum Teilbereich führenden Abschnitts gestuft und/oder kontinuierlich ab, vorzugsweise zumindest mittels des ersten und des zweiten Materials, vorzugsweise zudem mittels eines oder mehrerer weiterer Materialien.

Geeigneterweise ist bei dem erfindungsgemäßen Getriebeelement das erste Material mit oder aus Einsatzstahl und/oder einer Nickelbasislegierung gebildet.

Zweckmäßig ist bei dem erfindungsgemäßen Getriebelement das zweite Material mit oder aus Hartmetall, vorzgugsweise Wolframcarbid und/oder einer, vorzugsweise bei mindestens 250 Grad Celsius thermisch langzeitbeständigen, Nickelbasislegierung gebildet. Erfindungsgemäß ist in dieser Weiterbildung des erfindungsgemäßen Getriebeelements als additives Werkstück für das zweite Material ein hochwarmfestes und sprödhartes Material heranziehbar.

Bei dem erfindungsgemäßen Getriebeelement ist vorteilhaft zumindest das zweite Material mittels Laserauftragsschweißens, insbesondere Laserdrahtauftragsschweißens oder Laserpulverauftragsschweißens, und/oder mittels thermischen Spritzens und/oder mittels Kaltgasspritzens und/oder mittels Lichtbogenauftragsschweißens und/oder mittels eines Pulverbettverfahrens, insbesondere Laser Beam Melting und/oder Selective Laser Meltings und/oder Electron Beam Melting, gebildet. Mittels der vorstehenden additiven Fertigungsverfahren ist das zweite Material des Getriebeelements besonders einfach und kostengünstig druckbar.

Bei dem erfindungsgemäßen Verfahren zur Fertigung eines Getriebeleements wie vorstehend beschrieben wird zumindest das zweite Material zumindest im Randbereich mittels Laserauftragsschweißens, insbesondere Laserdrahtauftragsschweißens, und/oder thermischen Spritzens und/oder Kaltgasspritzens und/oder Lichtbogenauftragsschweißens und/oder eines Pulverbettverfahrens und/oder Selective Laser Meltings gebildet. Der erste Teilbereich kann grundsätzlich auf konventionelle Weise, d.h. urformend oder umformend oder zerspanend, mit dem ersten Material gebildet werden.

Grundsätzlich können bei dem erfindungsgemäßen Verfahren abschließend auch zusätzlich konventionelle und etablierte Hartfeinbearbeitungsschritte vorgenommen werden, sodass eine beliebig maßgenaue Fertigung erfindungsgemäß möglich ist.

Das erfindungsgemäße Getriebe weist mindestens ein erfindungsgemäßes Getriebeelement wie vorstehend beschrieben und/oder wie mit dem erfindungsgemäßen Verfahren gefertigt auf.

Die erfindungsgemäße Maschine ist insbesondere eine elektrische Maschine, vorzugsweise ein Generator und/oder ein Motor und/oder Elektromotor. Die erfindungsgemäße Maschine weist ein erfindungsgemäßes Getriebe wie vorstehend beschrieben auf.

Die erfindungsgemäße Turbine ist insbesondere eine Windkraftturbine und/oder eine Gasturbine und/oder eine Fluggasturbine. Die erfindungsgemäße Turbine weist ein erfindungsgemäßes Getriebe und/oder eine erfindungsgemäße Maschine wie vorstehend beschrieben auf.

Nachfolgend wird die Erfindung anhand eines in der Zeichnung dargestellten Ausführungsbeispiels näher erläutert.

Die einzige Zeichnungsfigur 1 zeigt ein erfindungsgemäßes Getriebeelement in Gestalt eines Zahnrades schematisch in einer Prinzipskizze im Querschnitt.

Das in der Zeichnung dargestellte erfindungsgemäße Getriebeleelement in Gestalt eines Zahnrades 10 ist Bestandteil einer erfindungsgemäßen elektrischen Maschine 20 in Form eines Generators einer erfindungsgemäßen Windkraftturbine 30. In weiteren, nicht eigens dargestellten Ausführungsbeispielen ist das Zahnrad 10 Bestandteil eines Getriebes einer Gasturbine oder einer Fluggasturbine oder eines Motors und entspricht im Übrigen dem dargestellten Ausführungsbeispiel.

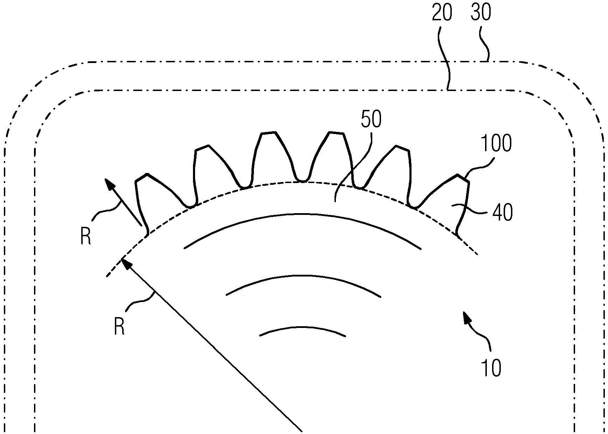

Das Zahnrad 10 ist in Zeichenebene der Fig. 1, d.h. um eine senkrecht auf der Zeichenebene stehende Drehachse (nicht explizit gezeigt), drehbeweglich. Wie in Fig. 1 dargestellt ist das Zahnrad 10 mit außenumfänglich um diese Drehachse herum angeordneten Zähnen 40 gezahnt. Die Zähne 40 strecken sich von einem im Wesentlichen kreisrunden Zahnradkern 50 radial, das heißt in radialer Richtung R, nach außen fort.

Das Zahnrad 10 ist erfindungsgemäß wie folgt gebildet: Zunächst wird der kreisrunde Zahnrandkern 50 mittels Urformung, im dargestellten Ausführungsbeispiel mittels Gießens, hergestellt. Dazu wird im gezeigten Ausführungsbeispiel eine Nickelbasislegierung herangezogen. Alternativ kann in weiteren, nicht eigens dargestellten Ausführungsbeispielen der Zahnradkern 50 mittels Umformung, beispielsweise von Einsatzstahl, oder mittels einer subtraktiven Fertigung, etwa mittels Zerspanung eines Blocks aus einer Nickelbasislegierung, gefertigt werden. Der Zahnradkern 50 bildet einen ersten Teilbereich des Zahnrades 10, welcher mit einem ersten Material, im dargestellten Ausführungsbeispiel einer Nickelbasislegierung, gebildet ist.
An den Zahnradkern 50 werden Zähne 40 mittels eines additiven Fertigungsverfahrens angeformt, im gezeigten Ausführungsbeispiel mittels additiver Fertigung aufgebracht. Dazu werden die Zähne 40 mittels Laserauftragsschweißens aus dem Hartmetall, im gezeigten Ausführungsbeispiel Wolframcarbid, an den Zahnradkern 50 angedruckt.

Im dargestellten Ausführungsbeispiel bilden die Zähne 40 einen Randbereich, der mit einem zweiten Material, hier wie beschrieben Wolframcarbid, gebildet ist.

Das zweite Material weist erfindungsgemäß eine Vickers-Härte auf, welche sich um mehr als 500 Härtegrade von der Vickers-Härte des ersten Materials unterscheidet. Dabei unterliegt das zweite Material an dem ersten Material zudem Druckeigenspannungen, welche das zweite Material besonders robust gegenüber mechanischen Beanspruchungen werden lässt.

In weiteren, nicht eigens dargestellten Ausführungsbeispielen kann das zweite Material mittels Laserdrahtauftragsschweißens oder thermischen Spritzens oder Lichtbogenauftragschweißens oder mittels eines Pulverbettverfahrens, insbesondere Laser Beam Meltings und/oder Electron Beam Meltings, angedruckt werden. Im dargestellten Ausführungsbeispiel beträgt die Vickers-Härte des zweiten Materials mehr als 800 HV, die Vickers-Härte des ersten Materials weniger als 300 HV.

In weiteren, nicht eigens dargestellten Ausführungsbeispielen bilden die Zähne 40 nicht in ihrer Gesamtheit den Randbereich aus, sondern lediglich ein radial äußerer Bereich der Zähne 40 bildet den Randbereich aus. Der innenliegende Teil der Zähne 40 ist Teil des Zahnradkerns 50, an welchem der äußere Bereich angedruckt ist.

In weiteren, nicht eigens dargestellten Ausführungsbeispielen kommen nicht lediglich zwei Materialien mit voneinander abweichenden Vickers-Härten zum Einsatz, sondern es kommen drei oder mehr Materialien zum Einsatz, deren voneinander abweichende Vickershärten in Richtung zum gezahnten Rand 100 des Zahnrades 10 hin, also in radialer Richtung R, zunehmen.

Dazu kann beispielsweise eine Nickelbasislegierung herangezogen werden, deren Legierungsbestandteile bereichsweise derart geändert werden, dass die Vickers-Härte der jeweiligen Bereiche mit zunehmender Nähe zum gezahnten Rand des Zahnrades 10 hin, also in radialer Richtung R, zunimmt.

In weiteren Ausführungsbeispielen ist der Randbereich nicht oder nicht nur mit oder an außenumfänglich angeordneten Zähnen 40 gebildet, sondern mit oder an innenumfänglich angeordneten Zähnen. Anstelle eines Zahnrades 10 kann in weiteren nicht gesondert dargestellten Ausführungsbeispielen als erfindungsgemäßes Getriebeelement eine Zahnstange vorhanden sein, wobei der Randbereich mit oder an einem gezahnten Rand der Zahnstange gebildet ist.

Es versteht sich, dass in den vorgenannten Ausführungsbeispielen der Randbereich nicht notwendigerweise an oder mit sämtlichen Zähnen 40 gebildet sein muss. Vielmehr kann der Randbereich auch beispielsweise an oder mit jedem zweiten oder dritten oder n-ten Zahn 40 gebildet sein.

## Patentansprüche

1. Mit Zähnen (40) gezahntes Getriebeelement (10), welches mindestens einen mit einem ersten Material gebildeten Teilbereich (50) sowie mindestens einen mit einem zweiten Material additiv gebildeten Randbereich aufweist, bei welchem das zweite Material eine größere Härte als das erste Material aufweist und insbesondere Druckeigenspannungen in der Oberfläche (100) des Randbereichs induziert.

2. Getriebeelement nach Anspruch 1, bei welchem Differenz der Vickers-Härte von zweiten Material und ersten Material mindestens 100, vorzugsweise mindestens 200, idealerweise mindestens 400, Härtegrande beträgt und insbesondere das zweite Material eine Vickers-Härte von zumindest 500, vorzugsweise mindestens 600, vorzugsweise zumindest 780 HV, und/oder das erste Material eine Vickers-Härte von höchstens 400 HV, vorzugsweise höchstens 350 HV, aufweist.

3. Getriebeelement nach einem der vorhergehenden Ansprüche, bei welchem zumindest ein oder mehrere, vorzugsweise sämtliche, der Zähne (40) den mit dem zweiten Material additiv gebildeten Randbereich aufweisen.

4. Getriebeelement nach einem der vorhergehenden Ansprüche, bei welchem zudem der Teilbereich (50) additiv gebildet ist oder der Teilbereich mittels Urformung, vorzugsweise Gießens, Umformens, vorzugsweise Schmiedens, Subtraktiv, insbesondere Zerspanens, gebildet ist.

5. Getriebeelement nach einem der vorhergehenden Ansprüche, bei welchem das erste Material eine höhere Duktilität als das zweite Material oder das zweite Material größere Druckeigenspannungen als das erste Material aufweist.

6. Getriebeelement nach einem der vorhergehenden Ansprüche, welches ein Zahnrad oder eine Zahnstange ist oder aufweist.

7. Getriebeelement nach einem der vorhergehenden Ansprüche, bei welchem die Härte entlang eines von einem Rand zum Teilbereich führenden Abschnitts gestuft und/oder kontinuierlich abnimmt, vorzugsweise zumindest mittels des ersten und des zweiten Materials, insbesondere mittels eines oder mehrerer weiterer Materialien.

8. Getriebeelement nach einem der vorhergehenden Ansprüche, bei welchem das erste Material mit oder aus Einsatzstahl und/oder Nickelbasislegierung gebildet ist.

9. Getriebeelement nach einem der vorhergehenden Ansprüche, bei welchem das zweite Material mit oder aus Hartmetall, vorzugsweise Wolframcarbid und/oder einer, vorzugsweise bei mindestens 250 Grad Celsius thermisch langzeitbeständigen, Nickelbasislegierung gebildet ist.

10. Getriebeelement nach einem der vorhergehenden Ansprüche, bei welchem zumindest das zweite Material mittels Laserauftragsschweißens, insbesondere Laserdrahtauftragsschweißens oder Laserpulverauftragsschweißens, und/oder thermischen Spritzens und/oder Kaltgasspritzens und/oder Lichtbogenauftragsschweißens und/oder mittels eines Pulverbettverfahrens, insbesondere Laser Beam Melting und/oder Selective Laser Meltings und/oder Electron Beam Melting, gebildet ist.

11. Verfahren zur Fertigung eines Getriebelements nach einem der vorhergehenden Ansprüche, bei welchem zumindest das zweite Material mittels Laserauftragsschweißens, insbesondere Laserdrahtauftragsschweißens, und/oder thermischen Spritzens und/oder Lichtbogenauftragsschweißens und/oder eines Pulverbettverfahrens und/oder Selective Laser Meltings gebildet wird.

12. Getriebe mit mindestens einem Getriebeelement nach einem der vorhergehenden Ansprüche und/oder gefertigt nach einem der vorhergehenden Ansprüche.

13. Maschine, insbesondere elektrische Maschine (20), vorzugsweise Generator und/oder Motor und/oder Elektromotor, mit einem Getriebe nach einem der vorhergehenden Ansprüche.

14. Turbine, insbesondere Windkraftturbine (30) und/oder Gasturbine und/oder Fluggasturbine, mit einem Getriebe und/oder einer elektrischen Maschine nach einem der vorhergehenden Ansprüche.
